# EUROPÄISCHE PATENTSCHRIFT

(11) **EP 3 330 490 B1**
(45) Veröffentlichungstag und Bekanntmachung des Hinweises auf die Patenterteilung: **15.05.2024**
(21) Anmeldenummer: 17203116.3
(22) Anmeldetag: 22.11.2017
(51) Int. Cl.: F01D 11/00, F02C 7/28

(54) **TURBOMASCHINEN-DICHTUNGSANORDNUNG**
TURBO MACHINES SEAL ARRANGEMENT
SYSTÈME D'ÉTANCHÉITÉ POUR TURBOMACHINES

(30) Priorität: 30.11.2016 DE 102016223867
(43) Veröffentlichungstag der Anmeldung: 06.06.2018
(73) Patentinhaber: MTU Aero Engines AG, 80995 München (DE)
(72) Erfinder: Böck, Alexander, 82288 Kottgeisering (DE)

(56) Entgegenhaltungen:
- EP-A1- 2 886 803
- WO-A1-2015/152742
- US-A- 5 797 723
- US-A1- 2014 248 127
- US-B1- 6 402 466

## Beschreibung

Die vorliegende Erfindung betrifft eine Dichtungsanordnung für eine Turbomaschine, insbesondere eine Gasturbine, eine Turbomaschine, insbesondere eine Gasturbine, mit der Dichtungsanordnung sowie ein Verfahren zum Abdichten eines Spaltes zwischen einem ersten und zweiten Bauteil der Dichtungsanordnung und ein Verfahren zum Montieren der Dichtungsanordnung.

Aus der EP 1 270 875 A2 ist eine Dichtungsanordnung mit einem ersten und einem zweiten Bauteil, einer Klappe zum Abdichten eines Spaltes zwischen dem ersten und zweiten Bauteil, und einer Blattfeder mit einem ersten und zweiten Schenkel bekannt, wobei eine Projektion eines Anlagebereichs des ersten Bauteils, gegen den sich der erste Schenkel über die Klappe abstützt, senkrecht zu dem ersten Schenkel außerhalb einer Auflagefläche des ersten Bauteils liegt, gegen die sich der zweite Schenkel der vorgespannten Blattfeder abstützt. Ein weiteres Beispiel einer Dichtungsanordnung ist in US 6 402 466 B1 gezeigt.

Eine Aufgabe einer Ausführung der vorliegenden Erfindung ist es, eine Dichtungsanordnung mit einer Klappe zum Abdichten eines Spaltes zwischen einem ersten und zweiten Bauteil einer Turbomaschine, insbesondere deren Montage und/oder Funktion, zu verbessern.

Diese Aufgabe wird durch eine Dichtungsanordnung mit den Merkmalen des Anspruchs 1 bzw. ein Verfahren mit den Merkmalen des Anspruchs 13 bzw. 14 gelöst. Anspruch 11 stellt eine Turbomaschine mit wenigstens einer hier beschriebenen Dichtungsanordnung unter Schutz. Vorteilhafte Ausführungsformen der Erfindung sind Gegenstand der Unteransprüche.

Nach einer Ausführung der vorliegenden Erfindung weist (wenigstens) eine Dichtungsanordnung für eine Turbomaschine, insbesondere eine Gasturbine, insbesondere (wenigstens) eine Dichtungsanordnung einer Turbomaschine, insbesondere einer Gasturbine, insbesondere für eine bzw. einer Verdichter- oder Turbinenstufe der Gasturbine, ein erstes Bauteil und ein zweites Bauteil auf, zwischen denen ein Spalt, insbesondere ein Ring(segment)spalt, ausgebildet ist. Mehrere Dichtungsanordnungen für die bzw. der Turbomaschine können dasselbe bzw. ein gemeinsames erste(s) Bauteil und/oder dasselbe bzw. ein gemeinsames zweite(s) Bauteil aufweisen. Zusätzlich oder alternativ kann in einer Ausführung ein gemeinsames bzw. dasselbe Bauteil einerseits ein bzw. das erste(s) Bauteil einer erfindungsgemäßen Dichtungsanordnung und zugleich ein bzw. das zweite(s) Bauteil einer weiteren erfindungsgemäßen Dichtungsanordnung, insbesondere (zugleich) eine Komponente dieses ersten Bauteils dieser einen erfindungsgemäßen Dichtungsanordnung und/oder eine Komponente dieses zweiten Bauteils dieser weiteren erfindungsgemäßen Dichtungsanordnung bilden.

In einer Ausführung ist das erste und/oder das zweite Bauteil ein ein- oder mehrteiliges bzw. -stückiges bzw. -komponentiges Bauteil, insbesondere Statorbauteil, zu dessen Abdichtung die vorliegende Erfindung mit besonderem Vorteil verwendet werden kann.

Zusätzlich oder alternativ weist in einer Ausführung das erste und/oder das zweite Bauteil eine Keramik-Matrix ("Ceramic Matrix Composite" CMC) auf, es kann insbesondere hieraus bestehen. Insbesondere bei solchen Materialien kann die vorliegende Erfindung mit besonderem Vorteil verwendet werden, da diese in einer Ausführung einfach und/oder kompakt ausgebildet und/oder ohne großen baulichen Aufwand am ersten und/oder zweiten Bauteil realisiert werden kann.

Nach einer Ausführung der vorliegenden Erfindung dichtet eine Klappe der Dichtungsanordnung den Spalt zwischen dem ersten und zweiten Bauteil wenigstens teilweise und/oder temporär, insbesondere in wenigstens einem vorliegend ohne Beschränkung der Allgemeinheit als Dichtzustand bezeichneten Zustand, insbesondere Betriebszustand, der Dichtungsanordnung bzw. Turbomaschine, ab bzw. ist hierzu vorgesehen, insbesondere eingerichtet.

Hierdurch können in einer Ausführung ein Betriebsverhalten der Turbomaschine verbessert, insbesondere Fluidräume, insbesondere Gasräume, durch die (geschlossene(n)) Klappe(n), wenigstens temporär und/oder teilweise voneinander getrennt werden, insbesondere ein Kühlluftbereich und ein Heißgaskanalbereich oder dergleichen.

In einer Ausführung ist die Klappe beweglich, insbesondere schwenkbar, gelagert. Hierdurch können in einer Ausführung, insbesondere thermisch bedingte, Relativbewegungen zwischen erstem und zweitem Bauteil wenigstens teilweise kompensiert werden.

In einer Ausführung ist die Klappe ringsegmentartig ausgebildet. Hierdurch können in einer Ausführung insbesondere Ringspalte um eine Rotations- bzw.

(Haupt)Maschinenachse der Turbomaschine bzw. Segmente hiervon vorteilhaft abgedichtet werden. Entsprechend sind bzw. werden nach einer Ausführung der vorliegenden Erfindung mehrere der hier beschriebenen Dichtungsanordnungen in einer Umfangsrichtung um eine Rotations- bzw. (Haupt)Maschinenachse der Turbomaschine nebeneinander und/oder in einer Radialrichtung senkrecht hierzu angeordnet, um einen oder mehrere Ringspalte abzudichten, wobei, wie bereits erwähnt, diese Dichtungsanordnungen dann dasselbe bzw. ein gemeinsames erste(s) Bauteil und dasselbe bzw. ein gemeinsames zweite(s) Bauteil aufweisen bzw. dasselbe, gemeinsame Bauteil ein erstes Bauteil einer ersten und zugleich ein zweites Bauteil einer zweiten Dichtungsanordnung bilden kann.

Nach einer Ausführung der vorliegenden Erfindung weist eine Blattfeder der Dichtungsanordnung einen ersten Schenkel und einen zweiten Schenkel auf, die in einer Weiterbildung in einem Verbindungsabschnitt der Blattfeder V- oder U-förmig verbunden sind. In einer Weiterbildung besteht die Blattfeder aus den beiden Schenkeln und dem Verbindungsabschnitt.

Hierdurch kann in einer Ausführung eine vorteilhafte, insbesondere leichte und/oder kompakte, Dichtungsanordnung zur Verfügung gestellt werden.

Nach einer Ausführung der vorliegenden Erfindung liegt in einem vorliegend ohne Beschränkung der Allgemeinheit als Montagezustand bezeichneten Zustand, in dem die Klappe und das zweite Bauteil einander nicht, insbesondere noch nicht, kontaktieren, eine Projektion eines Anlagebereichs des ersten Bauteils, gegen den sich der erste Schenkel über bzw. durch die Klappe (hindurch) abstützt, senkrecht zu einer Kontaktlinie durch wenigstens zwei Kontaktpunkte, in denen der ersten Schenkel und die Klappe einander berühren, insbesondere senkrecht zu einer Kontaktfläche, insbesondere Kontaktkegelfläche oder Kontaktebene, durch wenigstens drei Kontaktpunkte, in denen der ersten Schenkel und die Klappe einander berühren, teilweise oder vollständig innerhalb einer Auflagefläche des ersten Bauteils, gegen die sich der zweite Schenkel der vorgespannten Blattfeder, insbesondere unter bzw. in Kontakt mit dem ersten Bauteil bzw. unmittelbar, abstützt, insbesondere in einem oder mehreren, insbesondere allen, Axialschnitten bzw. ebenen Schnitten durch die Dichtungsanordnung, die eine Rotations- bzw. (Haupt)Maschinenachse der Turbomaschine enthalten.

Hierdurch kann in einer Ausführung eine Montage und/oder Funktion der Dichtungsanordnung verbessert werden. Insbesondere kann hierdurch in einer Ausführung die Klappe vor bzw. bei einer Montage der beiden Bauteile aneinander vorteilhaft ausgerichtet und so insbesondere die Gefahr eines Verkantes bei der Montage reduziert werden.

In einer Ausführung ist der Anlagebereichs des ersten Bauteils punkt- oder linienförmig und/oder liegt auf einer Kante, insbesondere einer Fase oder einem Radius, des ersten Bauteils, insbesondere eines Radialflansches des ersten Bauteils.

Hierdurch kann in einer Ausführung eine Kinematik einer Klappenbewegung verbessert werden.

In einer Ausführung liegen in dem Montagezustand der erste Schenkel und die Klappe flächig, insbesondere großflächig, aneinander an, insbesondere auf bzw. über wenigstens 75% ihres Überlappungsbereichs, bzw. sind hierzu vorgesehen, insbesondere eingerichtet. In einer Ausführung sind der erste Schenkel und/oder die Klappe kegelförmig oder eben ausgebildet, um die Kontaktfläche, insbesondere Kontaktkegelfläche bzw. Kontaktebene, zu bilden.

Hierdurch kann in einer Ausführung die Klappe vor bzw. bei einer Montage des zweiten Bauteils vorteilhaft ausgerichtet und/oder abgestützt werden.

In einer Ausführung liegt in wenigstens einem Dichtzustand, in dem Klappe und zweites Bauteil einander kontaktieren, ein Kontaktbereich des ersten Schenkels mit der Klappe zwischen einem Auflager der Klappe auf dem zweiten Bauteil und einem Auflager der Klappe auf dem ersten Bauteil, der in einer Ausführung, wenigstens im Wesentlichen, mit dem Anlagebereich übereinstimmen bzw. in dessen Nähe liegen kann.

Hierdurch kann in einer Ausführung die Klappe in diesem Dichtzustand vorteilhaft, insbesondere stabil, gegen die beiden Auflager (vor)gespannt werden und so den Spalt zwischen erstem und zweitem Bauteil vorteilhaft abdichten.

In einer Ausführung liegen in diesem Dichtzustand der erste Schenkel und die Klappe nicht mehr (groß)flächig aneinander an, insbesondere nur (noch) auf höchstens 35% ihres Überlappungsbereichs, bzw. sind hierzu vorgesehen, insbesondere eingerichtet. Insbesondere beträgt in einer Ausführung der Kontaktbereich des ersten Schenkels mit der Klappe in diesem Dichtzustand höchstens 75% der Kontaktfläche des ersten Schenkels mit der Klappe in dem Montagezustand. Mit anderen Worten reduziert sich in einer Ausführung durch den Übergang von dem Montage- in diesen Dichtzustand der (groß)flächige Kontakt der Klappe mit dem ersten Schenkel auf den oben beschriebenen Kontaktbereich des ersten Schenkels mit der Klappe bzw. geht in diesen über.

In einer Ausführung weist die Dichtungsanordnung ein oder mehrere Positionierelemente, insbesondere wenigstens oder genau zwei, insbesondere in einer Umfangsrichtung um eine bzw. die Rotations- bzw. (Haupt)Maschinenachsee der Turbomaschine voneinander beabstandete, Positionierelemente, auf, an dem bzw. denen die Klappe und/oder die Blattfeder gehaltert ist bzw. wird.

Hierdurch kann in einer Ausführung eine vorteilhafte Kinematik von Klappe und/oder Blattfeder dargestellt und/oder deren Montage verbessert werden.

In einer Weiterbildung wird bzw. ist die Klappe und/oder die Blattfeder an dem bzw. einem oder mehreren der Positionierelement(e jeweils) beweglich, insbesondere schwenk- und/oder verschiebbar, gehaltert.

Hierdurch kann in einer Ausführung eine vorteilhafte Kinematik von Klappe und/oder Blattfeder dargestellt und/oder deren Montage verbessert werden.

In einer Weiterbildung wird/werden bzw. ist/sind das bzw. eines oder mehrere der Positionierelement(e jeweils) mit dem ersten Bauteil, insbesondere einem Flansch, der die Auflagefläche bildet bzw. hierzu vorgesehen, insbesondere eingerichtet, ist, verbunden, insbesondere lösbar, insbesondere verschraubt.

Hierdurch kann in einer Ausführung die Montage und/oder Demontage der Klappe und/oder Blattfeder verbessert werden.

In einer Weiterbildung durchgreift das Positionierelement bzw. durchgreifen eines oder mehrere der Positionierelemente (jeweils) eine Durchgangsöffnung in der Klappe und/oder eine oder mehrere Durchgangsöffnungen in der Blattfeder, insbesondere eine Durchgangsöffnung in deren erstem Schenkel und/oder eine Durchgangsöffnung in deren zweitem Schenkel.

Hierdurch kann in einer Ausführung eine vorteilhafte Kinematik von Klappe und/oder Blattfeder dargestellt und/oder deren Montage verbessert werden.

In einer Weiterbildung ist zwischen dem Positionierelement bzw. einem oder mehreren der Positionierelemente und der bzw. den davon durchgriffenen Durchgangsöffnung(en) in der Klappe und/oder in der Blattfeder (jeweils) einen Spalt ausgebildet, der in einer Ausführung wenigstens 0,1 mm, insbesondere wenigstens 1 mm, und/oder wenigstens 0,1%, insbesondere wenigstens 1%, eines (maximalen) Durchmessers der Durchgangsöffnung beträgt.

Hierdurch kann in einer Ausführung eine vorteilhafte Kinematik von Klappe und/oder Blattfeder dargestellt und/oder deren Montage verbessert werden.

In einer Ausführung weist das erste Bauteil eine erste Komponente, die die Auflagefläche bildet bzw. aufweist bzw. hierzu vorgesehen, insbesondere eingerichtet, ist, und eine damit, insbesondere lösbar, verbundene, insbesondere verschraubte, zweite Komponente auf, die den Anlagebereich bildet bzw. aufweist bzw. hierzu vorgesehen, insbesondere eingerichtet, ist.

Hierdurch kann in einer Ausführung die Montage und/oder Demontage von Klappe und/oder Blattfeder verbessert werden.

In einer Ausführung weist die Turbomaschine wenigstens eine erste Dichtungsanordnung, wie sie hier beschrieben ist, und wenigstens eine zweite Dichtungsanordnung , wie sie hier beschrieben ist, auf, wobei das erste Bauteil der ersten Dichtungsanordnung, in einer Weiterbildung eine Komponente des (mehrteiligen) ersten Bauteils, das zweite Bauteil der zweiten Dichtungsanordnung oder eine Komponente hiervon bildet.

Hierdurch kann in einer Ausführung die Montage und/oder Demontage der Klappen und/oder Blattfedern der ersten und/oder zweiten Dichtungsanordnung verbessert und/oder eine einfache(re) und/oder kompakte(re) Turbomaschine zur Verfügung gestellt werden.

Nach einer Ausführung der vorliegenden Erfindung kontaktieren zum Abdichten des Spaltes zwischen dem ersten und zweiten Bauteil der Dichtungsanordnung bzw. Turbomaschine in wenigstens einem Dichtzustand die Klappe und das zweite Bauteil einander, wobei der Kontaktbereich des ersten Schenkels mit der Klappe zwischen dem Auflager der Klappe auf dem ersten Bauteil und dem Auflager der Klappe auf dem zweiten Bauteil liegt.

Hierdurch können in einer Ausführung die beiden Auflager als Dichtlippen fungieren und so den Spalt abdichten.

Nach einer Ausführung der vorliegenden Erfindung wird zum Montieren der Dichtungsanordnung in dem Montagezustand deren Klappe durch die Kontaktfläche des ersten Schenkels der vorgespannte Blattfeder gegen den Anlagebereich gespannt, und die Dichtungsanordnung durch Zustellen der beiden Bauteile aufeinander zu, insbesondere Verschieben (auch oder nur) in Axialrichtung parallel zu der Rotations- bzw. (Haupt)Maschinenachse der Turbomaschine, in einen Dichtzustand überführt, in dem Klappe und zweites Bauteil einander kontaktieren und ein Kontaktbereich des ersten Schenkels mit der Klappe zwischen dem Auflager der Klappe auf dem ersten Bauteil und dem Auflager der Klappe auf dem zweiten Bauteil liegt.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Axialschnitt einer Turbomaschine mit einer radial äußeren und einer radial inneren Dichtungsanordnung nach einer Ausführung der vorliegenden Erfindung in einem Montagezustand;
- Fig. 2: die Turbomaschine in einem Dichtzustand;
- Fig. 3: die Turbomaschine in einem weiteren Dichtzustand;
- Fig. 4: die radial äußere Dichtungsanordnung der Fig. 1 in vergrößerter Darstellung; und
- Fig. 5: die radial innere Dichtungsanordnung der Fig. 1 in vergrößerter Darstellung.

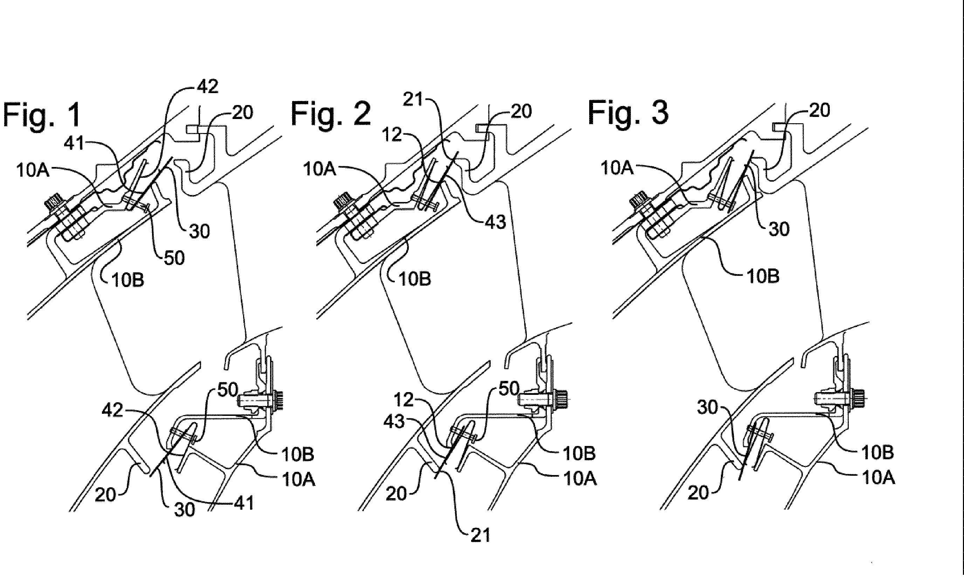

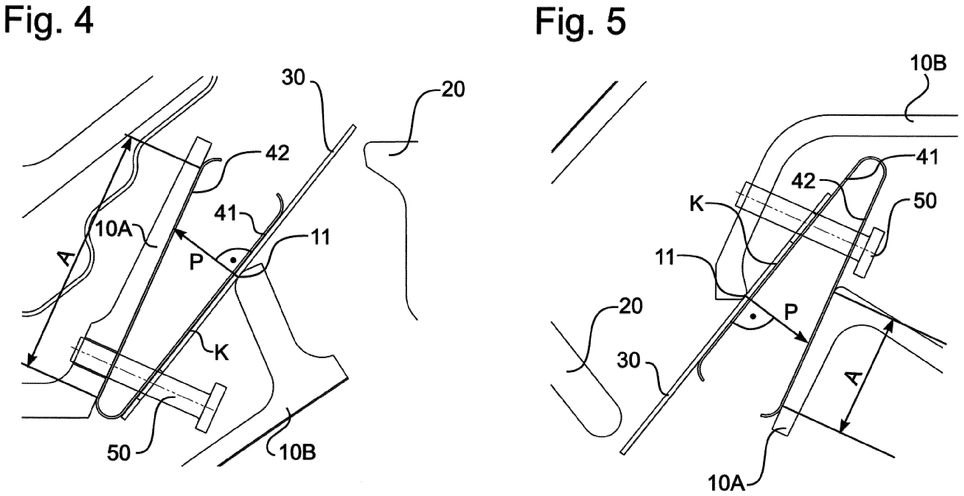

Fig. 1 zeigt einen Axialschnitt einer Turbomaschine, d.h. einen Schnitt, in dessen Schnittebene eine hier nicht dargestellte Rotations- bzw. (Haupt)Maschinenachse der Turbomaschine enthalten ist, mit einer in Fig. 4 in vergrößerter Darstellung gezeigten ersten, radial äußeren Dichtungsanordnung (oben in Fig. 1) und einer in Fig. 5 in vergrößerter Darstellung gezeigten zweiten, radial inneren Dichtungsanordnung (unten in Fig. 1) nach einer Ausführung der vorliegenden Erfindung in einem Montagezustand, Fig. 2, 3 jeweils in einem Dichtzustand.

Einander entsprechende Merkmale der ersten, radial äußeren und zweiten, radial inneren Dichtungsanordnung sind durch identische Bezugszeichen identifiziert.

Außer diesen beiden in dem Axialschnitt erkennbaren Dichtungsanordnungen weist die Turbomaschine baugleiche weitere erste und zweite Dichtungsanordnungen auf, die in Umfangsrichtung um die Rotations- bzw. (Haupt)Maschinenachse (horizontal in Fig. 1 - 5) der Turbomaschine aneinander angrenzend angeordnet sind.

Diese in Umfangsrichtung verteilten ersten bzw. zweiten Dichtungsanordnungen dichten in den Dichtzuständen jeweils einen Ringspalt zwischen einem ersten Statorbauteil 10A, 10B und einem zweiten Statorbauteil 20 der Turbomaschine ab.

Dabei bildet eine zweite Komponente 10B des ersten Statorbauteils einer ersten, radial äußeren Dichtungsanordnung (oben in Fig. 1 - 3) jeweils (zugleich) ein integral hiermit ausgebildetes zweites Statorbauteil 20 einer zweiten, radial inneren Dichtungsanordnung (unten in Fig. 1 - 3). Mit anderen Worten bildet dieses gemeinsame Bauteil einerseits die zweite Komponente 10B des ersten Statorbauteils der ersten, radial äußeren Dichtungsanordnung und zugleich das zweite Statorbauteil 20 der zweiten, radial inneren Dichtungsanordnung. Die ersten Statorbauteile weisen jeweils eine erste Komponente 10A und eine hiermit verschraubte zweite Komponente 10B auf.

Die Dichtungsanordnungen weisen jeweils eine ringsegmentartige schwenkbar gelagert Klappe 30 und eine Blattfeder mit einem ersten Schenkel 41 und einen zweiten Schenkel 42 auf.

In dem in Fig. 1, 4, 5 gezeigten Montagezustand, in dem die Klappe 30 und das zweite Bauteil 20 einander noch nicht kontaktieren, liegt, wie in Fig. 4, 5 durch die Projektionsrichtung P angedeutet, eine Projektion eines Anlagebereichs 11 der zweiten Komponente 10B des ersten Bauteils, gegen den sich der erste Schenkel 41 über bzw. durch die Klappe 30 abstützt, senkrecht zu einer kegelförmigen Kontaktfläche K, in der der ersten Schenkel 41 und die Klappe 30 einander großflächig berühren und von der in dem dargestellten Schnitt eine entsprechend ebenfalls mit K bezeichnete Kontaktlinie erkennbar ist, vollständig innerhalb einer Auflagefläche A der ersten Komponente 10A des mehrteiligen ersten Bauteils, gegen die sich der zweite Schenkel 42 der vorgespannten Blattfeder unter bzw. in Kontakt mit dem ersten Bauteil bzw. direkt abstützt.

Der Anlagebereich 11 des ersten Bauteils bzw. seiner zweiten Komponente 10B ist linienförmig und liegt auf einem Radius eines Radialflansches des ersten Bauteils bzw. seiner zweiten Komponente 10B.

In dem Montagezustand liegen der erste Schenkel 41 und die Klappe 30 flächig auf bzw. über wenigstens 75% ihres Überlappungsbereichs aneinander an, so dass die Klappe 30 durch die Kontaktfläche K des ersten Schenkels 41 der vorgespannten Blattfeder gegen den Anlagebereich 11 gespannt wird.

Zum Montieren der Dichtungsanordnungen werden diese durch in den Figuren horizontales Verschieben der beiden Bauteile in Axialrichtung parallel zu der Rotations- bzw. (Haupt)Maschinenachse der Turbomaschine aufeinander zu in den in Fig. 2 gezeigten Dichtzustand überführt, in dem die Klappe 30 und das zweite Bauteil 20 einander kontaktieren und ein Kontaktbereich 43 des ersten Schenkels 41 mit der Klappe 30 (radial und auf dem ersten Schenkel 41) zwischen einem Auflager 12 der Klappe 30 bei dem Anlagebereich 11 des ersten Bauteils 10 und einem Auflager 21 der Klappe 30 auf dem zweiten Bauteil 20 liegt.

In diesem Dichtzustand liegen der erste Schenkel 41 und die Klappe 30 nicht mehr großflächig aneinander an, sondern nur noch auf höchstens 35% ihres Überlappungsbereichs, so dass der Kontaktbereich des ersten Schenkels 41 mit der Klappe 30 in diesem Dichtzustand höchstens 75% der Kontaktfläche K des ersten Schenkels 41 mit der Klappe 30 in dem Montagezustand beträgt.

Durch weiteres Verschieben der beiden Bauteile in Axialrichtung können die Dichtungsanordnungen in den in Fig. 3 gezeigten Dichtzustand überführt werden, in dem die Blattfeder noch weiter verschwenkt bzw. ihr zweiter Schenkel 42 seinen großflächigen Kontakt zur ersten Komponente 10A des ersten Bauteils im Wesentlichen verliert.

Die Dichtungsanordnungen weisen jeweils zwei in Umfangsrichtung um die Rotations- bzw. (Haupt)Maschinenachse der Turbomaschine voneinander beabstandete Positionierstifte 50 auf, an denen die Klappen 30 und Blattfedern jeweils schwenkbar gehaltert sind.

Hierzu durchgreifen die Positionierelemente 50 jeweils eine Durchgangsöffnung in der Klappe 30 und eine Durchgangsöffnung in beiden Schenkeln 41, 42 der Blattfeder und sind bzw. werden mit einem Flansch der ersten Komponente 10A des ersten Bauteils, der die Auflagefläche A bildet, verschraubt, wobei zwischen dem Positionierelement 50 und der davon durchgriffenen Durchgangsöffnung in der Klappe 30 und den von dem Positionierelement 50 durchgriffenen Durchgangsöffnungen in beiden Schenkeln 41, 42 der Blattfeder jeweils einen Spalt ausgebildet ist, so dass Klappen 30 und Blattfedern schwenkbar an den die Positionierelementen 50 gehaltert sind.

Zum Abdichten des Spaltes zwischen dem ersten und zweiten Bauteil 10, 20 kontaktieren in den in Fig. 2, 3 gezeigten Dichtzuständen die Klappen 30 und das zweite Bauteil 20 einander, wobei die Kontaktbereiche 43 der ersten Schenkel 41 mit den Klappen 30 zwischen dem Auflager 12 der Klappe 30 auf dem ersten Bauteil 41 und dem Auflager 21 der Klappe 30 auf dem zweiten Bauteil 20 liegen.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10A/B: erste/zweite Komponente (erstes Bauteil)
- 11: Anlagebereich
- 12: Auflager
- 20: zweites Bauteil
- 21: Auflager
- 30: Klappe
- 41: erster Schenkel
- 42: zweiter Schenkel
- 43: Kontaktbereich
- 50: Positionierstift

- A: Auflagefläche
- K: Kontaktfläche bzw. Kontaktlinie
- P: Projektionsrichtung

## Patentansprüche

1. Dichtungsanordnung für eine Turbomaschine, insbesondere eine Gasturbine, mit einem ersten Bauteil (10A, 10B), einem zweiten Bauteil (20), einer Klappe (30) zum Abdichten eines Spaltes zwischen dem ersten und zweiten Bauteil, und einer Blattfeder mit einem ersten Schenkel (41) und einem zweiten Schenkel (42), wobei in einem Montagezustand, in dem Klappe und zweites Bauteil einander nicht kontaktieren, eine Projektion eines Anlagebereichs (11) des ersten Bauteils (10A, 10B), gegen den sich der erste Schenkel (41) über die Klappe (30) abstützt, senkrecht zu einer Kontaktlinie (K) durch wenigstens zwei Kontaktpunkte des ersten Schenkels (41) mit der Klappe (30) wenigstens teilweise innerhalb einer Auflagefläche (A) des ersten Bauteils (10A, 10B) liegt, gegen die sich der zweite Schenkel (42) der vorgespannten Blattfeder abstützt.

2. Dichtungsanordnung nach dem vorhergehenden Anspruch, **dadurch gekennzeichnet, dass** der erste Schenkel (41) und die Klappe (30) in dem Montagezustand flächig aneinander anliegen.

3. Dichtungsanordnung nach einem der vorhergehenden Ansprüche, **dadurch gekennzeichnet, dass** in einem Dichtzustand, in dem Klappe (30) und zweites Bauteil (20) einander kontaktieren, ein Kontaktbereich (43) des ersten Schenkels (41) mit der Klappe (30) zwischen einem Auflager (12) der Klappe (30) auf dem ersten Bauteil (10A, 10B) und einem Auflager (21) der Klappe (30) auf dem zweiten Bauteil (20) liegt.

4. Dichtungsanordnung nach einem der vorhergehenden Ansprüche, **gekennzeichnet durch** wenigstens ein Positionierelement (50), an dem die Klappe (30) und/oder die Blattfeder gehaltert ist.

5. Dichtungsanordnung nach dem vorhergehenden Anspruch, **dadurch gekennzeichnet, dass** die Klappe (30) und/oder die Blattfeder an dem Positionierelement (50) beweglich gehaltert ist.

6. Dichtungsanordnung nach einem der beiden vorhergehenden Ansprüche,
**dadurch gekennzeichnet, dass** das Positionierelement (50) mit dem ersten Bauteil (10A, 10B), insbesondere einem Flansch, der die Auflagefläche (A) bildet, verbunden ist.

7. Dichtungsanordnung nach einem der drei vorhergehenden Ansprüche, **dadurch gekennzeichnet, dass** das Positionierelement (50) eine Durchgangsöffnung in der Klappe (30) und/oder wenigstens eine Durchgangsöffnung in der Blattfeder durchgreift.

8. Dichtungsanordnung nach dem vorhergehenden Anspruch, **gekennzeichnet durch** einen Spalt zwischen dem Positionierelement (50) und der Durchgangsöffnung in der Klappe (30) und/oder der Durchgangsöffnung in der Blattfeder.

9. Dichtungsanordnung nach einem der vorhergehenden Ansprüche, **dadurch gekennzeichnet, dass** das erste und/oder zweite Bauteil ein Statorbauteil der Turbomaschine, insbesondere einer Verdichter- oder Turbinenstufe der Gasturbine, ist und/oder eine Keramik-Matrix aufweist.

10. Dichtungsanordnung nach einem der vorhergehenden Ansprüche, **dadurch gekennzeichnet, dass** das erste Bauteil eine erste Komponente (10A), die die Auflagefläche (A) bildet, und eine damit, insbesondere lösbar, verbundene zweite Komponente (10B), die den Anlagebereich (11) bildet, aufweist.

11. Turbomaschine, insbesondere Gasturbine, mit wenigstens einer Dichtungsanordnung nach einem der vorhergehenden Ansprüche.

12. Turbomaschine nach dem vorhergehenden Anspruch mit wenigstens einer ersten Dichtungsanordnung nach einem der vorhergehenden Ansprüche und wenigstens einer zweiten Dichtungsanordnung nach einem der vorhergehenden Ansprüche, wobei das erste Bauteil (10A, 10B) der ersten Dichtungsanordnung das zweite Bauteil (20) der zweiten Dichtungsanordnung oder eine Komponente hiervon bildet.

13. Verfahren zum Abdichten eines Spaltes zwischen dem ersten und zweiten Bauteil (10A, 10B, 20) einer Dichtungsanordnung nach einem der vorhergehenden Ansprüche, wobei in einem Dichtzustand die Klappe (30) und das zweite Bauteil (20) einander kontaktieren und ein Kontaktbereich (43) des ersten Schenkels (41) mit der Klappe (30) zwischen einem Auflager (12) der Klappe (30) auf dem ersten Bauteil (10A, 10B) und einem Auflager (21) der Klappe (30) auf dem zweiten Bauteil (20) liegt.

14. Verfahren zum Montieren einer Dichtungsanordnung nach einem der vorhergehenden Ansprüche, wobei in dem Montagezustand deren Klappe (30) durch die Kontaktfläche (K) des ersten Schenkels (41) der vorgespannte Blattfeder gegen den Anlagebereich (11) gespannt wird, und die Dichtungsanordnung durch Zustellen der beiden Bauteile aufeinander zu in einen Dichtzustand überführt wird, in dem Klappe (30) und zweites Bauteil (20) einander kontaktieren und ein Kontaktbereich (43) des ersten Schenkels (41) mit der Klappe (30) zwischen einem Auflager (12) der Klappe (30) auf dem ersten Bauteil (10A, 10B) und einem Auflager (21) der Klappe (30) auf dem zweiten Bauteil (20) liegt.

## Claims

1. Sealing arrangement for a turbomachine, in particular a gas turbine, comprising a first component (10A, 10B), a second component (20), a flap (30) for sealing a gap between the first and the second component, and a leaf spring having a first leg (41) and a second leg (42), wherein, in an assembled state, in which the flap and the second component do not contact one another, a projection of a bearing region (11) of the first component (10A, 10B), against which region the first leg (41) is supported via the flap (30), perpendicular to a contact line (K) through at least two contact points of the first leg (41) with the flap (30), is located at least partially within a support surface (A) of the first component (10A, 10B), against which surface the second leg (42) of the pretensioned leaf spring is supported.

2. Sealing arrangement according to the preceding claim,
**characterized in that** the first leg (41) and the flap (30) rest flat against one another in the assembled state.

3. Sealing arrangement according to any of the preceding claims,
**characterized in that,** in a sealed state, in which the flap (30) and the second component (20) contact one another, a contact region (43) of the first leg (41) with the flap (30) is located between a support (12) of the flap (30) on the first component (10A, 10B) and a support (21) of the flap (30) on the second component (20).

4. Sealing arrangement according to any of the preceding claims,
**characterized by** at least one positioning element (50) on which the flap (30) and/or the leaf spring is held.

5. Sealing arrangement according to the preceding claim,
**characterized in that** the flap (30) and/or the leaf spring is held movably on the positioning element (50).

6. Sealing arrangement according to either of the two preceding claims,
**characterized in that** the positioning element (50) is connected to the first component (10A, 10B), in particular to a flange which forms the support surface (A).

7. Sealing arrangement according to any of the three preceding claims,
**characterized in that** the positioning element (50) engages through a through-opening in the flap (30) and/or at least one through-opening in the leaf spring.

8. Sealing arrangement according to the preceding claim, **characterized by** a gap between the positioning element (50) and the through-opening in the flap (30) and/or the through-opening in the leaf spring.

9. Sealing arrangement according to any of the preceding claims,
**characterized in that** the first and/or second component is a stator component of the turbomachine, in particular a compressor stage or turbine stage of the gas turbine, and/or comprises a ceramic matrix.

10. Sealing arrangement according to any of the preceding claims,
**characterized in that** the first component has a first element (10A) which forms the support surface (A), and a second element (10B) which is in particular releasably connected thereto and forms the bearing region (11).

11. Turbomachine, in particular a gas turbine, comprising at least one sealing arrangement according to any of the preceding claims.

12. Turbomachine according to the preceding claim, comprising at least one first sealing arrangement according to any of the preceding claims and at least one second sealing arrangement according to any of the preceding claims, wherein the first component (10A, 10B) of the first sealing arrangement forms the second component (20) of the second sealing arrangement or an element thereof.

13. Method for sealing a gap between the first and the second component (10A, 10B, 20) of a sealing arrangement according to any of the preceding claims, wherein, in a sealed state, the flap (30) and the second component (20) contact one another, and a contact region (43) of the first leg (41) with the flap (30) is located between a support (12) of the flap (30) on the first component (10A, 10B) and a support (21) of the flap (30) on the second component (20).

14. Method for assembling a sealing arrangement according to any of the preceding claims, wherein, in the assembled state, the flap (30) thereof is braced by the contact surface (K) of the first leg (41) of the pretensioned leaf spring against the bearing region (11), and the sealing arrangement is transferred into a sealed state by the two components being moved toward one another, in which sealed state the flap (30) and the second component (20) contact one another and a contact region (43) of the first leg (41) with the flap (30) is located between a support (12) of the flap (30) on the first component (10A, 10B) and a support (21) of the flap (30) on the second component (20).

## Revendications

1. Agencement d'étanchéité pour une turbomachine, en particulier une turbine à gaz, comportant un premier élément de construction (10A, 10B), un second élément de construction (20), un clapet (30) destiné à assurer l'étanchéité d'une fente entre le premier et le second élément de construction et un ressort à lames comportant une première patte (41) et une seconde patte (42), dans lequel, dans un état de montage, dans lequel le clapet et le second élément de construction ne sont pas en contact l'un avec l'autre, une projection d'une zone d'appui (11) du premier élément de construction (10A, 10B), contre laquelle la première patte (41) s'appuie par l'intermédiaire du clapet (30), se situe perpendiculairement par rapport à une ligne de contact (K) à travers au moins deux points de contact de la première patte (41) avec le clapet (30) au moins partiellement à l'intérieur d'une surface de butée (A) du premier élément de construction (10A, 10B), contre laquelle s'appuie la seconde patte (42) du ressort à lames précontraint.

2. Agencement d'étanchéité selon la revendication précédente,
**caractérisé en ce que** la première patte (41) et le clapet (30), dans l'état de montage, se situent à plat l'un contre l'autre.

3. Agencement d'étanchéité selon l'une des revendications précédentes,
**caractérisé en ce que,** dans un état d'étanchéité, dans lequel le clapet (30) et le second élément de construction (20) sont en contact l'un avec l'autre, une zone de contact (43) de la première patte (41) avec le clapet (30) se situe entre une butée (12) du clapet (30) sur le premier élément de construction (10A, 10B) et une butée (21) du clapet (30) sur le second élément de construction (20).

4. Agencement d'étanchéité selon l'une des revendications précédentes,
**caractérisé par** au moins un élément de positionnement (50), au niveau duquel le clapet (30) et/ou le ressort à lames est/sont maintenu(s).

5. Agencement d'étanchéité selon la revendication précédente,
**caractérisé en ce que** le clapet (30) et/ou le ressort à lames est/sont maintenu(s) de manière mobile au niveau de l'élément de positionnement (50).

6. Agencement d'étanchéité selon l'une des deux revendications précédentes, **caractérisé en ce que** l'élément de positionnement (50) est relié au premier élément de construction (10A, 10B), en particulier à une bride, qui forme la surface de butée (A).

7. Agencement d'étanchéité selon l'une des trois revendications précédentes, **caractérisé en ce que** l'élément de positionnement (50) passe à travers une ouverture de passage dans le clapet (30) et/ou au moins une ouverture de passage dans le ressort à lames.

8. Agencement d'étanchéité selon la revendication précédente,
**caractérisé par** une fente entre l'élément de positionnement (50) et l'ouverture de passage dans le clapet (30) et/ou l'ouverture de passage dans le ressort à lames.

9. Agencement d'étanchéité selon l'une des revendications précédentes,
**caractérisé en ce que** le premier et/ou le second élément de construction est/sont un élément de construction statorique de la turbomachine, en particulier un étage de compresseur ou de turbine de la turbine à gaz et/ou présente/présentent une matrice en céramique.

10. Agencement d'étanchéité selon l'une des revendications précédentes,
**caractérisé en ce que** le premier élément de construction présente un premier composant (10A), qui forme la surface de butée (A), et un second composant (10B), relié, en particulier de manière amovible, à celui-ci, qui forme la zone d'appui (11).

11. Turbomachine, en particulier turbine à gaz, comportant au moins un agencement d'étanchéité selon l'une des revendications précédentes.

12. Turbomachine selon la revendication précédente, comportant au moins un premier agencement d'étanchéité selon l'une des revendications précédentes et au moins un second agencement d'étanchéité selon l'une des revendications précédentes, le premier élément de construction (10A, 10B) du premier agencement d'étanchéité formant le second élément de construction (20) du second agencement d'étanchéité ou un composant de celui-ci.

13. Procédé destiné à assurer l'étanchéité d'une fente entre le premier et le second élément de construction (10A, 10B, 20) d'un agencement d'étanchéité selon l'une des revendications précédentes, dans lequel, dans un état d'étanchéité, le clapet (30) et le second élément de construction (20) sont en contact l'un avec l'autre et une zone de contact (43) de la première patte (41) avec le clapet (30) se situe entre une butée (12) du clapet (30) sur le premier élément de construction (10A, 10B) et une butée (21) du clapet (30) sur le second élément de construction (20).

14. Procédé destiné à monter un agencement d'étanchéité selon l'une des revendications précédentes dans lequel, dans l'état de montage, son clapet (30) est contraint par la surface de contact (K) de la première patte (41) du ressort à lames précontraint contre la zone d'appui (11) et l'agencement d'étanchéité est amené dans un état d'étanchéité par rapprochement des deux éléments de construction l'un vers l'autre, dans lequel état d'étanchéité le clapet (30) et le second élément de construction (20) sont en contact l'un avec l'autre et une zone de contact (43) de la première patte (41) avec le clapet (30) se situe entre une butée (12) du clapet (30) sur le premier élément de construction (10A, 10B) et une butée (21) du clapet (30) sur le second élément de construction (20).
